# EUROPÄISCHE PATENTSCHRIFT

(11) **EP 3 326 858 B1**
(45) Veröffentlichungstag und Bekanntmachung des Hinweises auf die Patenterteilung: **23.10.2024**
(21) Anmeldenummer: 17203538.8
(22) Anmeldetag: 24.11.2017
(51) Int. Cl.: B60N 2/02, B60N 2/22, B60N 2/235

(54) **FAHRZEUGSITZ, INSBESONDERE EIN KRAFTFAHRZEUGSITZ**
VEHICLE SEAT, IN PARTICULAR MOTOR VEHICLE SEAT
SIÈGE DE VÉHICULE, EN PARTICULIER SIÈGE DE VÉHICULE AUTOMOBILE

(30) Priorität: 25.11.2016 DE 102016223457
(43) Veröffentlichungstag der Anmeldung: 30.05.2018
(73) Patentinhaber: MAN Truck & Bus SE, 80995 München (DE)
(72) Erfinder: Schweitzer, Simon Martin Christian, 81245 München (DE); Baumann, Manuel, 85551 Kirchheim (DE); Kremser, Florian, 81479 München (DE)
(74) Vertreter: v. Bezold & Partner Patentanwälte - PartG mbB

(56) Entgegenhaltungen:
- EP-A2- 1 099 593
- DE-A1- 102007 027 564
- FR-A1- 2 829 439
- US-A- 4 626 028
- US-A1- 2009 134 679

## Beschreibung

Die Erfindung betrifft einen Fahrzeugsitz, insbesondere einen Kraftfahrzeugsitz, mit einem Sitzteil, einer in ihrer Neigung einstellbaren Lehne, wenigstens einem Beschlag zur schwenkbaren Lagerung der Lehne an dem Sitzteil, wobei eine Neigungseinstellung der Lehne mittels des Beschlags arretierbar ist, und einem Handgriff zur Betätigung einer Entriegelung des Beschlags.

Es sind Fahrzeugsitze bekannt, deren Lehnen relativ zu einem Sitzteil in ihrer Neigung einstellbar sind. Mit fortschreitender Technik und zunehmender Integration einer Vielzahl an Funktionen und Einstellmöglichkeiten bei Fahrzeugsitzen, bedarf es einer jeweiligen Betätigungsmöglichkeit durch einen in dem Fahrzeugsitz sitzenden Insassen, um diese Vielzahl an unterschiedlichen Funktionen einzustellen.

Die US 2009/134679 A1 offenbart eine Steuervorrichtung zum Regeln der Einstellung von Fahrzeugsitzen. Die Steuervorrichtung ist ein Doppelfunktions-Steuerarm, der den manuellen Liegestuhl und den Lendenwirbelmechanismus in einem einzigen Griff vereint. Der Griff wird in eine erste Richtung bewegt, um den Mechanismus der Rückenlehne zu lösen, ohne den Mechanismus der Lendenverstellung zu beeinflussen. Der gleiche Griff wird in eine zweite Richtung bewegt, um den Lendenverstellmechanismus zu betätigen, ohne den Liegemechanismus zu beeinflussen.

Die DE 10 2007 027564 A1 offenbart eine Sitzverstellvorrichtung umfassend einen ersten Verriegelungsmechanismus, der zwischen einer eingerückten Position, in welcher ein Fahrzeugsitzunterteil relativ zu dem Fahrzeugboden nach vorne oder hinten bewegbar ist, und einer eingerückten Position beweglich ist, in welcher der Sitzunterteil an einer Bewegung gehindert ist. Ein zweiter Verriegelungsmechanismus ist zwischen einer ausgerückten Position, in welcher eine Sitzlehne der Fahrzeugsitzeinrichtung relativ zu dem Sitzunterteil schwenkend nach vorne oder hinten bewegbar ist, und einer eingerückten Position beweglich, in welcher die Sitzlehne daran gehindert wird, sich zu bewegen. Ein Betätigungsmechanismus ist mit dem ersten und zweiten Verriegelungsmechanismus mechanisch verbunden und zwischen einer ersten Betätigungsposition und einer zweiten Betätigungsposition beweglich. In der ersten Betätigungsposition ist der erste Verriegelungsmechanismus in der ausgerückten Position und bleibt der zweite Verriegelungsmechanismus in der eingerückten Position. In der zweiten Betätigungsposition ist der zweite Verriegelungsmechanismus in der ausgerückten Position und verbleibt der erste Verriegelungsmechanismus in der eingerückten Position.

Weitere Fahrzeugsitze sind bspw. aus der EP 1 099 593 A2 und der FR 2 829 439 A1 bekannt. Weiterhin ist ein Fahrzeugsitz mit einem Sitzteil aus der US 4 626 028 A bekannt, bei dem ein unterer Lehnenabschnitt einer zweiteiligen Lehne durch einen Beschlag in seiner Neigung zum Sitzteil einstellbar ist und ein oberer Lehnenabschnitt durch einen Beschlag in seiner Neigung relativ zu dem unteren Lehnenabschnitt einstellbar ist.

Der Erfindung liegt die Aufgabe zu Grunde, einen Fahrzeugsitz der eingangs genannten Art zu verbessern, insbesondere einen Fahrzeugsitz mit einer reduzierten Anzahl an Betätigungsmitteln trotz gleichbleibender Anzahl an Einstellkomponenten, bzw. einen Fahrzeugsitz mit einer erhöhten Anzahl an Einstellkomponenten trotz gleichbleibender Anzahl an Betätigungsmitteln bereitzustellen.

Diese Aufgabe wird erfindungsgemäß gelöst durch einen Fahrzeugsitz gemäß Anspruch 1. Der Fahrzeugsitz, insbesondere Kraftfahrzeugsitz, weist einen Sitzteil, eine in ihrer Neigung einstellbare Lehne, wenigstens einen Beschlag zur schwenkbaren Lagerung der Lehne an dem Sitzteil, und einen Handgriff zur Entriegelung des Beschlags auf, wobei ein Neigungswinkel der Lehne mittels des Beschlags arretierbar ist, wobei ein Adapter drehbar gelagert und mit dem Beschlag gekoppelt ist, wobei zwischen dem Handgriff und dem Adapter ein Mitnehmer angeordnet ist, wobei der Mitnehmer mit dem Adapter in einer ersten Drehrichtung auf Mitnahme gekoppelt zusammenwirkt, und eine Drehung des Mitnehmers in der ersten Drehrichtung den Beschlag entriegelt, wobei eine Drehung des Mitnehmers in einer zweiten Drehrichtung eine Verriegelungsvorrichtung einer weiteren Einstellkomponente des Fahrzeugsitzes betätigt.

Dadurch, dass ein Adapter drehbar gelagert und mit dem Beschlag gekoppelt ist, wobei zwischen dem Handgriff und dem Adapter ein Mitnehmer angeordnet ist, wobei der Mitnehmer mit dem Adapter in einer ersten Drehrichtung auf Mitnahme gekoppelt zusammenwirkt, und eine Drehung des Mitnehmers in der ersten Drehrichtung den Beschlag entriegelt, wobei eine Drehung des Mitnehmers in einer zweiten Drehrichtung eine Verriegelungsvorrichtung einer weiteren Einstellkomponente des Fahrzeugsitzes betätigt, kann mittels des Handgriffs sowohl der Beschlag zur Einstellung des Neigungswinkels der Lehne entriegelt werden, als auch bei einer Betätigung in entgegengesetzter Drehrichtung eine Verriegelungsvorrichtung einer weiteren Einstellkomponente des Fahrzeugsitzes freigegeben oder entriegelt oder betätigt werden.

Vorteilhafte Ausgestaltungen, welche einzeln oder in Kombination miteinander eingesetzt werden können, sind Gegenstand der Unteransprüche.

Ferner kann eine sich in einer Querrichtung erstreckende Welle vorgesehen sein, welche mit dem wenigsten einen Beschlag derart wirkverbunden ist, dass eine Drehung der Welle den Beschlag entriegelt. Ferner kann ein zweiter Beschlag vorgesehen sein, welcher an einer dem ersten Beschlag gegenüberliegenden Seite des Fahrzeugsitzes angeordnet ist. Die Welle kann koaxial zu einer Schwenkachse der Lehne angeordnet sein. Die beiden Beschläge können mittels der Welle wirkverbunden sein, so dass beide Beschläge zeitgleich entriegelbar sind.

Eine Durchgangsöffnung des Adapters und eine Öffnung des Mitnehmers können koaxial zur Welle angeordnet sein. Der Adapter kann drehfest mit der Welle verbunden sein. Der Adapter kann aus einem Kunststoffmaterial gefertigt sein. Der Adapter kann mittels eines Spritzgussverfahrens gefertigt sein. Der Adapter kann mit dem Beschlag wirkverbunden sein. Der Mitnehmer kann eine Anschlagsfläche (einen Anschlag) aufweisen. Der Adapter kann eine Anschlagsfläche aufweisen, insbesondere eine senkrecht zu einer Umfangsrichtung orientierten Anschlagsfläche. Der Mitnehmer kann im Bereich einer Öffnung einen Anschlag aufweisen, welcher durch eine Drehung des Mitnehmers in einer vorgegebenen Drehrichtung mit der Anschlagsfläche des Adapters in Kontakt bringbar ist. Mittels des Anschlags des Mitnehmers und der Anschlagfläche des Adapters kann eine einseitige Kopplung auf Mitnahme bereitstellbar sein. In einer der zuvor genannten Drehrichtung entgegengesetzte Drehrichtung kann der Mitnehmer unabhängig von dem Adapter drehbar sein, insbesondere entlang eines Leerweges drehbar sein.

Ein erstes Federelement kann zwischen Adapter und Beschlag wirken, um den Adapter in Richtung einer Grundstellung vorzuspannen. Das erste Federelement kann eine Spiralfeder sein. Der Adapter kann mittels des ersten Federelements vorgespannt sein. Der Adapter kann mittels des ersten Federelements in einer ersten Drehrichtung, insbesondere in Richtung einer ersten Endstellung des Adapters, in welcher der Beschlag verriegelt ist, vorgespannt sein. Die Endstellung des Adapters ist relativ zum Fahrzeugsitz definiert. Der Adapter kann ausgehend von einer ersten Endstellung in einer zweiten Drehrichtung drehbar sein, beispielsweise um bis zu 30° drehbar sein.

Darüber hinaus kann ein zweites Federelement zwischen dem Adapter und dem Mitnehmer wirken, um den Mitnehmer in Richtung einer Grundstellung vorzuspannen. Das zweite Federelement kann eine Spiralfeder sein. Der Mitnehmer kann mittels des zweiten Federelements vorgespannt sein. Der Mitnehmer kann mittels des zweiten Federelements in einer zweiten Drehrichtung, insbesondere in Richtung einer ersten Endstellung des Mitnehmers, in welcher sich ein Anschlag des Mitnehmers und eine Anschlagfläche des Adapters in Anlage befinden, vorgespannt sein. Die erste Endstellung des Mitnehmers ist in Relation zum Adapter definiert und wird bei einer Drehung des Adapters entsprechend der Drehung mit verlagert. Das zweite Federelement wirkt bevorzugt in einer entgegengesetzten Drehrichtung auf den Mitnehmer, als das erste Federelement auf den Adapter. Der Mitnehmer kann ausgehend von seiner ersten Endstellung in einer ersten Drehrichtung drehbar sein, beispielsweise um bis zu 20° drehbar sein.

Der Mitnehmer kann wenigstens einen Nocken, insbesondere einen radial abstehenden Nocken, aufweisen, welcher mit einem Vorsprung des Adapters zusammenwirkt, wenn der Adapter zusammen mit dem Mitnehmer entlang der zweiten Drehrichtung verdreht ist. Der Mitnehmer kann einen Arm aufweisen, insbesondere einen radial abstehenden Arm. Der Arm kann eine Aufnahme zur Verbindung eines Endabschnittes eines Bowdenzuges aufweisen.

Der Bowdenzug kann mit seinem dem Arm gegenüberliegenden Ende mit der Verriegelungsvorrichtung einer weiteren Einstellkomponente des Fahrzeugsitzes wirkverbunden sein.

Erfindungsgemäß dient die weitere Einstellkomponente des Fahrzeugsitzes der Einstellung einer Neigung eines oberen Lehnenabschnitts einer zweiteiligen Lehne, relativ zu einem unteren Lehnenabschnitt der zweiteiligen Lehne.

Die Erfindung betrifft auch ein Kraftfahrzeug, insbesondere ein Nutzfahrzeug (z. B. einen Omnibus oder einen Lastkraftwagen), mit einem Fahrzeugsitz wie hierin offenbart.

Bevor nachfolgend Ausgestaltungen der Erfindung eingehender an Hand von Zeichnungen beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: eine schematische Darstellung eines erfindungsgemäßen Fahrzeugsitzes,
- Fig. 2:: eine perspektivische Ansicht eines Beschlagsystems des Fahrzeugsitzes aus Fig. 1,
- Fig. 3:: eine Explosionsdarstellung eines Adapters, eines Mitnehmers, eines ersten und zweiten Federelements,
- Fig. 4:: eine perspektivische Ansicht der Komponenten aus Fig. 3 in zusammengesetztem Zustand,
- Fig. 5:: eine ausschnittsweise Darstellung des Fahrzeugsitzes mit den Komponenten gemäß Fig. 4,
- Fig. 6:: eine ausschnittsweise Darstellung des Fahrzeugsitzes gemäß Fig. 5 mit einem montierten Handgriff,
- Fig. 7:: eine vergrößerte Ansicht des Beschlagsystems des Fahrzeugsitzes,
- Fig. 8:: eine Schnittdarstellung des Beschlagsystems von Fig. 7,
- Fig. 9:: eine Ansicht des Beschlagsystems von Fig. 7 in einem Zustand mit gedrehtem Adapter, und
- Fig. 10:: eine Ansicht des Beschlagsystems von Fig. 7 in einem Zustand mit gedrehtem Mitnehmer.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

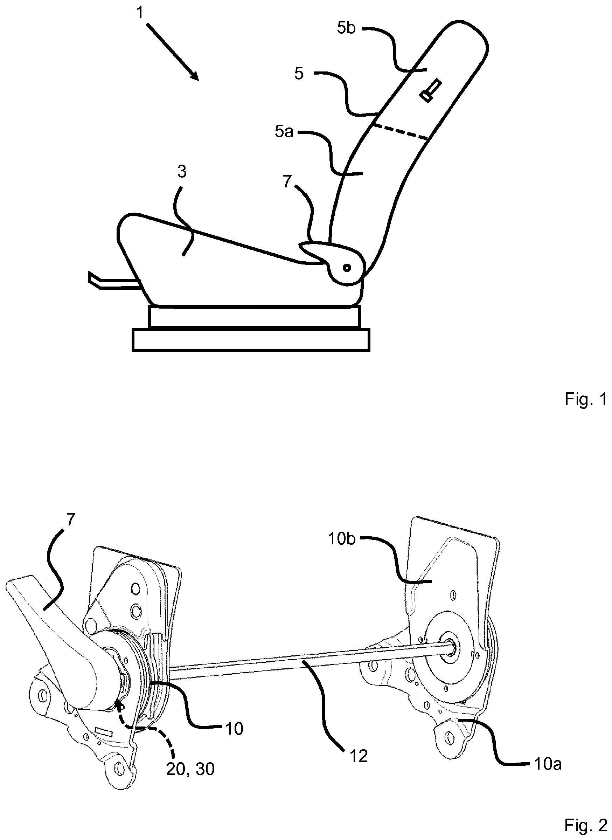

Fig. 1 zeigt einen erfindungsgemäßen Fahrzeugsitz 1. Der Fahrzeugsitz 1 weist einen Sitzteil 3 und eine in ihrer Neigung einstellbare Lehne 5 auf. Zur schwenkbaren Lagerung der Lehne 5 an dem Sitzteil 3 ist wenigstens ein Beschlag 10 vorgesehen, wobei eine Neigungseinstellung der Lehne 5 mittels des Beschlags 10 arretierbar ist. Bevorzugt ist auf jeder Seites des Fahrzeugsitzes 1 ein Beschlag 10 angeordnet. Ferner ist ein Handgriff 7 zur Betätigung einer Entriegelung des Beschlags 10 gezeigt, welcher vorliegend fluchtend zu dem Beschlag 10 angeordnet ist.

Der Fahrzeugsitz 1 kann insbesondere in einem Kraftfahrzeug, insbesondere einem Nutzfahrzeug, umfasst sein. Beispielsweise kann das Nutzfahrzeug ein Omnibus oder ein Lastkraftwagen sein.

Fig. 2 zeigt eine perspektivische Ansicht eines Beschlagsystems des Fahrzeugsitzes 1 aus Fig. 1. Das Beschlagsystem weist zwei Beschläge 10 auf, welche jeweils auf einer gegenüberliegenden Seite des Fahrzeugsitzes 1 montierbar sind. Die Beschläge 10 sind in Form von aus dem Stand der Technik bekannten Rastbeschlägen ausgebildet, wie sie beispielsweise aus der DE 102008024853 A1 bekannt sind. Die Beschläge 10 weisen jeweils ein unteres Beschlagteil 10a und ein oberes Beschlagteil 10b auf, welche bei entriegeltem Beschlag 10 gegeneinander verdrehbar sind. Das untere Beschlagteil 10a ist bekanntermaßen mit einem Rahmenteil des Sitzteils 3 des Fahrzeugsitzes 1 verbindbar, wobei das obere Beschlagteil 10b mit einem Rahmenabschnitt der Lehne 5 des Fahrzeugsitzes 1 verbindbar ist.

Ferner ist eine sich in einer Querrichtung y erstreckende Welle 12 vorgesehen, welche mit den vorliegend zwei Beschlägen 10 wirkverbunden ist. Die Welle 12 ist koaxial zu einer Schwenkachse der Lehne 5 angeordnet. Die beiden Beschläge 10 sind mittels der Welle 12, welche auch als Übertragungsstange bezeichnet sein kann, derart miteinander wirkverbunden, dass eine Betätigung der Welle 12 beide Beschläge 10 entriegelt oder verriegelt, bzw. die Betätigungsbewegung eines der beiden Beschläge 10 mittels der Welle 12 auf den jeweils anderen Beschlag 10 übertragbar ist. Der Handgriff 7 ist fluchtend zur Welle 12 angeordnet und mit der Welle 12 wirkverbunden. Anders ausgedrückt, sind die beiden Beschläge 10 mittels der Welle 12 wirkverbunden, so dass beide Beschläge 10 mittels nur genau eines Handgriffs 7 zeitgleich entriegelbar sind.

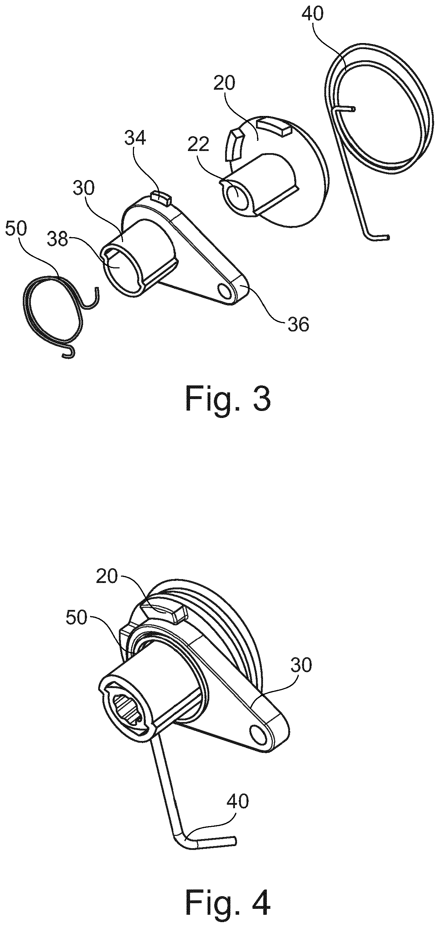

Zwischen dem Handgriff 7 und dem jeweils dem Handgriff benachbarten Beschlag 10 sind die in den Figuren 3 und 4 gezeigten Komponenten angeordnet. Hierbei handelt es sich um einen Adapter 20, einen Mitnehmer 30, ein erstes Federelement 40 und ein zweites Federelement 50. Das erste Federelement 40 weist die Form einer Schenkelfeder auf. Das zweite Federelement 50 weist die Form einer Schenkelfeder auf. Der Mitnehmer 30 weist einen Arm 36 auf, an dessen freiem Ende eine Aufnahme zur Verbindung mit einem Endabschnitt eines Bowdenzuges 60 vorgesehen ist.

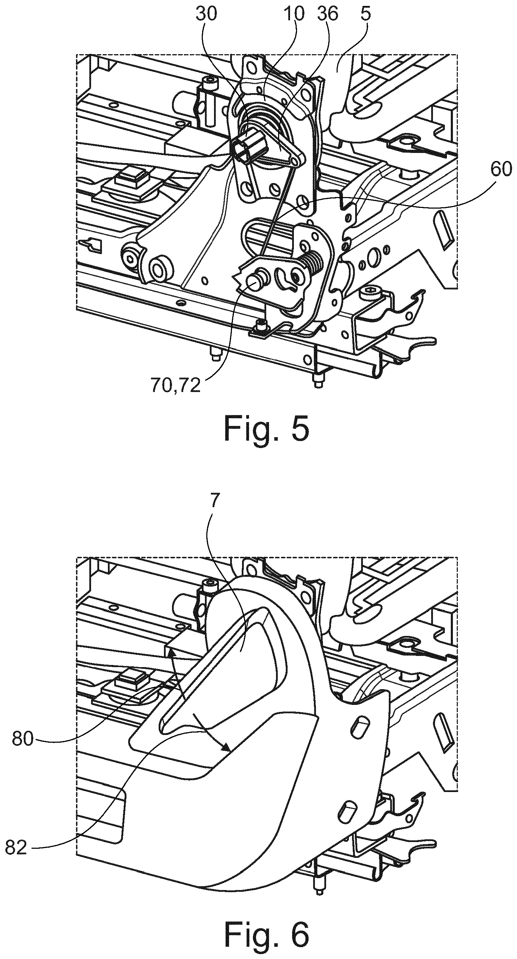

Fig. 5 zeigt eine ausschnittsweise Darstellung des Fahrzeugsitzes 1 mit den Komponenten gemäß Fig. 4, welche um einen Endabschnitt der Welle 12 angeordnet sind. Vorliegend ist der Adapter 20 unmittelbar drehfest mit der Welle 12 verbunden, welche wiederum drehfest mit den beiden Beschlägen 10 wirkverbunden ist. Hierdurch ist der Adapter 20 auf den Beschlag 10 wirkend angeordnet. Ferner ist der Mitnehmer 30 auf den Adapter 20 aufgesteckt.

Der Mitnehmer 30 ist zur Entriegelung des Beschlages 10 mit dem Adapter 20 in einer ersten Drehrichtung 80 auf Mitnahme gekoppelt. Eine Verriegelungsvorrichtung 70 einer weiteren Einstellkomponente des Fahrzeugsitzes 1 ist ferner dadurch betätigbar, wenn der Mitnehmer 30 entlang einer zweiten Drehrichtung 82 bewegt wird.

Der Bowdenzug 60 ist mit seinem dem Arm 36 des Mitnehmers 30 gegenüberliegenden Ende mit der Verriegelungsvorrichtung 70 der weiteren Einstellkomponente des Fahrzeugsitzes 1 wirkverbunden, insbesondere mit einem Betätigungshebel 72 der Verriegelungsvorrichtung 70 verbunden. Die weitere Einstellkomponente des Fahrzeugsitzes 1 kann der Einstellung einer Neigung des Sitzteils 3 oder der Einstellung einer Neigung eines oberen Lehnenabschnitts 5b, relativ zu einem unteren Lehnenabschnitt 5a, einer zweiteiligen Lehne 5 dienen.

Fig. 6 zeigt eine ausschnittsweise Darstellung des Fahrzeugsitzes 1, wobei ausgehend von dem Fahrzeugsitz 1 gemäß Fig. 5 zunächst eine seitliche Abdeckung montiert ist und anschließend der Handgriff 7 fluchtend zur Welle 12 montiert wurde. Der Handgriff 7 ist hierbei mit dem Mitnehmer 30 drehfest verbunden.

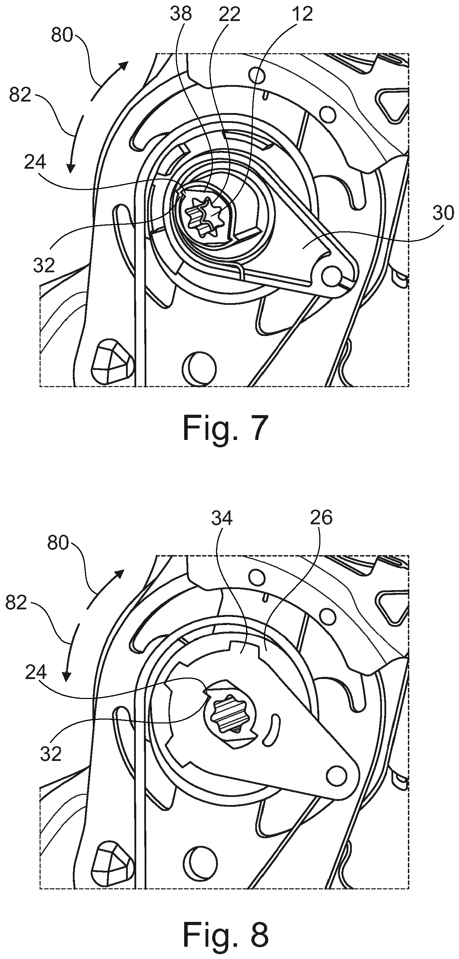

Fig. 7 zeigt eine vergrößerte Ansicht des an dem Beschlag 10 des Fahrzeugsitzes 1 montierten Adapters 20, mit daran angeordnetem Mitnehmer 30. Der Adapter 20 weist eine von einem rotationssymmetrischen Querschnitt abweichende Durchgangsöffnung 22 auf, mittels welcher er auf die Welle 12 aufsteckbar ist. Durch den nicht rotationssymmetrischen Öffnungsquerschnitt ist der Adapter 20 drehfest mit der Welle 12 verbunden, wobei die Welle 12 bevorzugt einen entsprechend kooperierenden Querschnitt aufweist. Vorliegend weist die Welle 12 ein Keilwellenprofil auf.

Der Adapter 20 weist eine Anschlagsfläche 24 auf, insbesondere eine senkrecht zu einer Umfangsrichtung orientierte Anschlagsfläche 24. Der Mitnehmer 30 weist im Bereich einer Öffnung 38 einen Anschlag 32 auf, welcher durch eine Drehung des Mitnehmers 30 in einer Drehrichtung 80 mit der Anschlagsfläche 24 des Adapters 20 in Kontakt bringbar. Mittels des Anschlags 32 des Mitnehmers 30 und der Anschlagfläche 24 des Adapters 20 ist eine einseitige Kopplung auf Mitnahme bereitgestellt. In einer der zuvor genannten Drehrichtung 80 entgegengesetzten Drehrichtung 82 ist der Mitnehmer 30 unabhängig von dem Adapter 20 drehbar, insbesondere entlang eines Leerweges drehbar.

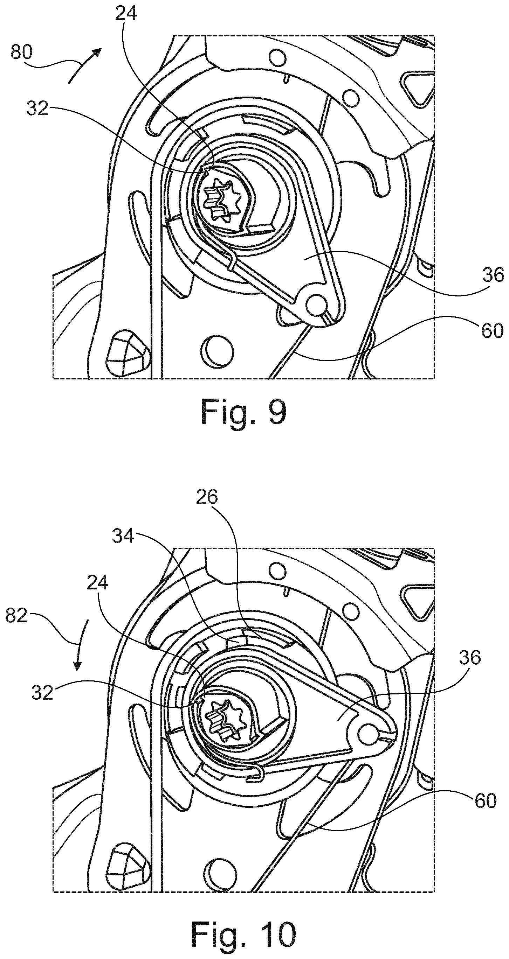

Der in Fig. 7 gezeigte Zustand der dargestellten Komponenten stellt eine Grundstellung des Mitnehmers 30 und des Adapters 20 dar, in welcher die Beschläge 10 sowie die Verriegelungsvorrichtung 70 nicht betätigt sind. Das erste Federelement 40 ist zwischen Adapter 20 und Beschlag 10 wirkend angeordnet, um den Adapter 20 in die Grundstellung zu überführen. Der Adapter 20 ist hierbei mittels des ersten Federelements 40 in der Drehrichtung 82 in Richtung einer ersten Endstellung des Adapters 20 vorgespannt. Die Endstellung des Adapters 20 ist relativ zum Fahrzeugsitz 1 definiert und kann beispielsweise mittels eines Endanschlages vorgegeben sein. Der Adapter 20 ist ausgehend von der ersten Endstellung des Adapters 20, welche der Grundstellung entspricht, in der Drehrichtung 80 drehbar, beispielsweise um bis zu 30° drehbar. In der Grundstellung sind die beiden Beschläge 10 verriegelt. Dieser Zustand ist in Fig. 9 dargestellt.

Das zweite Federelement 50 ist zwischen dem Adapter 20 und dem Mitnehmer 30 wirkend angeordnet. Jeweils ein Federende des zweiten Federelements 50 stützt sich an dem Adapter 20 und dem Mitnehmer 30 ab. Das zweite Federelement 50 dient einer Überführung des Mitnehmers 30 in eine Grundstellung relativ zum Adapter 20. Der Mitnehmer 30 ist mittels des zweiten Federelements 50 in der Drehrichtung 80 in Richtung der Grundstellung des Mitnehmers 30, in welcher sich der Anschlag 32 des Mitnehmers 30 und die Anschlagfläche 24 des Adapters 20 in Anlage befinden, vorgespannt. Die dargestellte Grundstellung des Mitnehmers 30 ist in Relation zum Adapter 20 definiert und wird bei einer Drehung des Adapters 20 entsprechend der Drehung mit verlagert. Das zweite Federelement 50 wirkt in der ersten Drehrichtung 80 auf den Mitnehmer 30. Das erste Federelement 40 wirkt in einer zweiten Drehrichtung 82 auf den Adapter 20. Der Mitnehmer 30 kann ausgehend von seiner Endstellung in der Drehrichtung 82 drehbar sein, beispielsweise um bis zu 20° drehbar sein. Dabei löst sich der Anschlag 32 von der Anschlagfläche 24. Dieser Zustand ist in Fig. 10 dargestellt.

In Fig. 8 ist eine Schnittdarstellung des Mitnehmers 30 und des Adapters 20 gezeigt. Der Mitnehmer 30 weist vorliegend drei radial abstehende Nocken 34 auf, welche in taschenartigen Vorsprüngen 26 des Adapters 20 aufgenommen sind, sofern sich der Mitnehmer 30 in der Grundstellung befindet. Die taschenartigen Vorsprünge 26 sind radial nach innen, sowie in Drehrichtung 82 geöffnet. Die taschenartigen Vorsprünge 26 sind radial nach außen und in Drehrichtung 80 geschlossen. Wird der Mitnehmer 30 relativ zum Adapter 20 verdreht, drehen die Nocken 34 aus den Vorsprüngen 26 heraus. Wird der Mitnehmer 30 in der Drehrichtung 80 verdreht, befinden sich die Nocken 34 in Eingriff mit den Vorsprüngen 26 und leiten die Rotationskraft hierdurch sicher in den Adapter 20 ein und verdrehen diesen in gleicher Drehrichtung 80.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus.

### Bezugszeichenliste

- 1: Fahrzeugsitz
- 3: Sitzteil
- 5: Lehne
- 5a: unterer Lehnenabschnitt
- 5b: oberer Lehnenabschnitt
- 7: Handgriff
- 10: Beschlag
- 10a: unteres Beschlagteil
- 10b: oberes Beschlagteil
- 12: Welle
- 20: Adapter
- 22: Durchgangsöffnung
- 24: Anschlagfläche
- 26: Vorsprung
- 30: Mitnehmer
- 32: Anschlag
- 34: Nocken
- 36: Arm
- 38: Öffnung
- 40: Federelement
- 50: Federelement
- 60: Bowdenzug
- 70: Verriegelungsvorrichtung
- 72: Betätigungshebel
- 80: Drehrichtung
- 82: Drehrichtung

## Patentansprüche

1. Fahrzeugsitz (1), insbesondere ein Kraftfahrzeugsitz, mit einem Sitzteil (3), einer in ihrer Neigung einstellbaren Lehne (5), wenigstens einem Beschlag (10) zur schwenkbaren Lagerung der Lehne (5) an dem Sitzteil (3), und einem Handgriff (7) zur Entriegelung des Beschlags (10), wobei ein Neigungswinkel der Lehne (5) mittels des Beschlags (10) arretierbar ist,
wobei:
- ein Adapter (20) drehbar gelagert und mit dem Beschlag (10) gekoppelt ist,
- zwischen dem Handgriff (7) und dem Adapter (20) ein Mitnehmer (30) angeordnet ist,
- der Mitnehmer (30) mit dem Adapter (20) in einer ersten Drehrichtung (80) auf Mitnahme gekoppelt zusammenwirkt, und eine Drehung des Mitnehmers (30) in der ersten Drehrichtung (80) den Beschlag (10) entriegelt, und
- eine Drehung des Mitnehmers (30) in einer zweiten Drehrichtung (82) eine Verriegelungsvorrichtung (70) einer weiteren Einstellkomponente des Fahrzeugsitzes (1) betätigt,
**dadurch gekennzeichnet, dass** die weitere Einstellkomponente des Fahrzeugsitzes (1) zur Einstellung einer Neigung eines oberen Lehnenabschnitts (5b) einer zweiteiligen Lehne relativ zu einem unteren Lehnenabschnitt (5a) der zweiteiligen Lehne ausgebildet ist.

2. Fahrzeugsitz (1) nach Anspruch 1, wobei:
eine sich in einer Querrichtung erstreckende Welle (12) vorgesehen ist, welche mit dem wenigsten einen Beschlag (10) derart wirkverbunden ist, dass eine Drehung der Welle (12) den Beschlag (10) entriegelt; und/oder
ein zweiter Beschlag (10) vorgesehen ist, welcher an einer dem ersten Beschlag (10) gegenüberliegenden Seite des Fahrzeugsitzes (1) angeordnet ist.

3. Fahrzeugsitz (1) Anspruch 2, wobei:
die Welle (12) koaxial zu einer Schwenkachse der Lehne (5) angeordnet ist; und/oder
die beiden Beschläge (10) mittels der Welle (12) wirkverbunden sind, so dass beide Beschläge (10) zeitgleich entriegelbar sind; und/oder
eine Durchgangsöffnung (22) des Adapters (20) und eine Öffnung (38) des Mitnehmers (30) koaxial zur Welle (12) angeordnet sind; und/oder
der Adapter (20) drehfest mit der Welle (12) verbunden ist.

4. Fahrzeugsitz (1) nach einem der vorherigen Ansprüche, wobei:
der Adapter (20) aus einem Kunststoffmaterial gefertigt ist; und/oder
der Adapter (20) mittels eines Spritzgussverfahrens gefertigt ist.

5. Fahrzeugsitz (1) nach einem der vorherigen Ansprüche, wobei:
der Mitnehmer (30) einen Anschlag (32) aufweist; und/oder
der Adapter (20) eine Anschlagfläche (24) aufweist, insbesondere eine senkrecht zu einer Umfangsrichtung orientierte Anschlagfläche (24).

6. Fahrzeugsitz (1) nach Anspruch 5, wobei:
der Mitnehmer (30) im Bereich einer Öffnung (38) den Anschlag (32) aufweist, welcher durch eine Drehung des Mitnehmers (30) in einer vorgegebenen Drehrichtung mit der Anschlagfläche (24) des Adapters (20) in Kontakt bringbar ist; und/oder
mittels des Anschlags (32) des Mitnehmers (30) und der Anschlagfläche (24) des Adapters (20) eine einseitige Kopplung auf Mitnahme bereitstellbar ist; und/oder
der Mitnehmer (30) in einer Drehrichtung unabhängig von dem Adapter (20) drehbar ist, insbesondere entlang eines Leerweges drehbar ist.

7. Fahrzeugsitz (1) nach einem der vorherigen Ansprüche, wobei:
ein erstes Federelement (40) zwischen dem Adapter (20) und dem Beschlag (10) wirkt, um den Adapter (20) in Richtung einer Grundstellung vorzuspannen, und/oder
ein zweites Federelement (50) zwischen dem Adapter (20) und dem Mitnehmer (30) wirkt, um den Mitnehmer (30) in Richtung einer Grundstellung vorzuspannen.

8. Fahrzeugsitz (1) nach Anspruch 7, wobei:
das erste Federelement (40) eine Spiralfeder ist; und/oder
der Adapter (20) mittels des ersten Federelements (40) vorgespannt ist.

9. Fahrzeugsitz (1) nach Anspruch 7 oder Anspruch 8, wobei:
der Adapter (20) mittels des ersten Federelements (40) in einer ersten Drehrichtung, insbesondere in Richtung einer ersten Endstellung des Adapters (20), in welcher der Beschlag (10) verriegelt ist, vorgespannt ist, und/oder
der Adapter (20) ausgehend von einer ersten Endstellung in einer zweiten Drehrichtung drehbar ist, beispielsweise um bis zu 30° drehbar ist.

10. Fahrzeugsitz (1) nach einem der Ansprüche 7 bis 9, wobei:
das zweite Federelement (50) eine Spiralfeder ist; und/oder
der Mitnehmer (30) mittels des zweiten Federelements (50) vorgespannt ist; und/oder
der Mitnehmer (30) mittels des zweiten Federelements (50) in einer zweiten Drehrichtung, insbesondere in Richtung einer ersten Endstellung des Mitnehmers (30), in welcher sich ein Anschlag (32) des Mitnehmers (30) und eine Anschlagsfläche (24) des Adapters (20) in Anlage befinden, vorgespannt ist.

11. Fahrzeugsitz (1) nach einem der Ansprüche 7 bis 10, wobei:
das zweite Federelement (50) in einer entgegengesetzten Drehrichtung auf den Mitnehmer (30) wirkt, als das erste Federelement (40) auf den Adapter (20); und/oder
der Mitnehmer (30) ausgehend von seiner ersten Endstellung in einer ersten Drehrichtung drehbar ist, beispielsweise um bis zu 20° drehbar ist.

12. Fahrzeugsitz (1) nach einem der vorherigen Ansprüche, wobei:
der Mitnehmer (30) wenigstens einen Nocken (34), insbesondere einen radial abstehenden Nocken, aufweist, welcher mit einem Vorsprung (26) des Adapters (20) zusammenwirkt, wenn der Adapter (20) zusammen mit dem Mitnehmer (30) entlang der zweiten Drehrichtung verdreht ist; und/oder
der Mitnehmer (30) einen Arm (36) aufweist, insbesondere einen radial abstehenden Arm.

13. Fahrzeugsitz (1) nach Anspruch 12, wobei:
der Arm (36) eine Aufnahme zur Verbindung eines Endabschnittes eines Bowdenzuges (60) aufweist und, insbesondere, der Bowdenzug (60) mit seinem dem Arm (36) gegenüberliegenden Ende mit der Verriegelungsvorrichtung (70) der weiteren Einstellkomponente des Fahrzeugsitzes (1) wirkverbunden ist.

14. Kraftfahrzeug, insbesondere Nutzfahrzeug, mit einem Fahrzeugsitz nach einem der vorherigen Ansprüche.

## Claims

1. A vehicle seat (1), in particular a motor vehicle seat, having a seat member (3), a backrest (5) adjustable in its inclination, at least one fitting (10) on the seat member (3) for pivotably mounting the backrest (5), and a handle (7) for unlocking the fitting (10), wherein an angle of inclination of the backrest (5) is lockable by the fitting (10), wherein:
- an adapter (20) is rotatably mounted and coupled to the fitting (10),
- a catch (30) is arranged between the handle (7) and the adapter (20),
- the catch (30) co-operates with the adapter (20) in a first rotational direction (80) in an entrainment-coupled manner, and a rotation of the catch (30) in the first rotational direction (80) unlocks the fitting (10), and
- a rotation of the catch (30) in a second rotational direction (82) actuates a locking
device (70) of a further adjustment component of the vehicle seat (1), **characterised in that** the further adjustment component of the vehicle seat (1) is configured to adjust an inclination of an upper backrest section (5b) of a two-part backrest relative to a lower backrest section (5a) of the two-part backrest.

2. The vehicle seat (1) according to claim 1, wherein:
a shaft (12) extending in a transverse direction is provided, which is operatively connected to the least one fitting (10) such that a rotation of the shaft (12) unlocks the fitting (10); and/or
a second fitting (10) is provided, which is arranged on a side of the vehicle seat (1) opposite the first fitting (10).

3. The vehicle seat (1) claim 2, wherein:
the shaft (12) is arranged coaxially to a pivot axis of the backrest (5); and/or
the two fittings (10) are operatively connected by the shaft (12), so that both fittings (10) are unlockable at the same time; and/or
a passage opening (22) of the adapter (20) and an opening (38) of the catch (30) are arranged coaxially to the shaft (12); and/or
the adapter (20) is non-rotatably connected to the shaft (12).

4. The vehicle seat (1) according to one of the preceding claims, wherein:
the adapter (20) is made of a plastic material; and/or
the adapter (20) is manufactured by an injection moulding process.

5. The vehicle seat (1) according to one of the preceding claims, wherein:
the catch (30) has a stop (32); and/or
the adapter (20) has a stop surface (24), in particular a stop surface (24) orientated perpendicular to a circumferential direction.

6. Vehicle seat (1) according to claim 5, wherein:
the catch (30) has the stop (32) in the region of an opening (38), which can be brought into contact with the stop surface (24) of the adapter (20) by rotating the catch (30) in a predetermined rotational direction; and/or
by the stop (32) of the catch (30) and the stop surface (24) of the adapter (20), a one-sided coupling for entrainment can be provided; and/or
the catch (30) is rotatable in a rotational direction independently of the adapter (20), in particular is rotatable along an idle path.

7. The vehicle seat (1) according to one of the preceding claims, wherein:
a first spring element (40) acts between the adapter (20) and the fitting (10) to bias the adapter (20) towards a default position, and/or
a second spring element (50) acts between the adapter (20) and the catch (30) to bias the catch (30) in the direction of a default position.

8. The vehicle seat (1) according to claim 7, wherein:
the first spring element (40) is a spiral spring; and/or
the adapter (20) is pretensioned by the first spring element (40).

9. The vehicle seat (1) according to claim 7 or claim 8, wherein:
the adapter (20) is pretensioned by the first spring element (40) in a first rotational direction, in particular in the direction of a first end position of the adapter (20), in which the fitting (10) is locked, and/or
the adapter (20) is rotatable from a first end position in a second rotational direction, for example by up to 30°.

10. The vehicle seat (1) according to one of claims 7 to 9, wherein:
the second spring element (50) is a coil spring; and/or
the catch (30) is preloaded by the second spring element (50); and/or
the catch (30) is pretensioned by the second spring element (50) in a second rotational direction, in particular in the direction of a first end position of the catch (30), in which a stop (32) of the catch (30) and a stop surface (24) of the adapter (20) are in contact.

11. The vehicle seat (1) according to one of claims 7 to 10, wherein:
the second spring element (50) acts on the catch (30) in an opposite rotational direction than the first spring element (40) acts on the adapter (20); and/or
the catch (30) is rotatable in a first rotational direction, for example by up to 20°, starting from its first end position.

12. The vehicle seat (1) according to one of the preceding claims, wherein:
the catch (30) comprises at least one cam (34), in particular a radially projecting cam, which co-operates with a projection (26) of the adapter (20) when the adapter (20) is rotated together with the catch (30) along the second rotational direction; and/or
the catch (30) has an arm (36), in particular a radially protruding arm.

13. The vehicle seat (1) according to claim 12, wherein:
the arm (36) has a receptacle for connecting an end section of a Bowden cable (60) and, in particular, the Bowden cable (60) is operatively connected by its end opposite the arm (36) to the locking device (70) of the further adjustment component of the vehicle seat (1).

14. A motor vehicle, in particular commercial vehicle, with a vehicle seat according to one of the preceding claims.

## Revendications

1. Siège de véhicule (1), en particulier siège de véhicule automobile, comportant une partie d'assise (3), un dossier (5) à inclinaison réglable, au moins une ferrure (10) servant au montage pivotant du dossier (5) sur la partie d'assise (3), et une poignée (7) servant au déverrouillage de la ferrure (10), dans lequel un angle d'inclinaison du dossier (5) peut être bloqué à l'aide de la ferrure (10),
dans lequel :
- un adaptateur (20) est monté à rotation et est accouplé à la ferrure (10),
- un élément d'entraînement (30) est disposé entre la poignée (7) et l'adaptateur (20),
- l'élément d'entraînement (30) coopère avec l'adaptateur (20) de manière accouplée en entraînement dans un premier sens de rotation (80), et une rotation de l'élément d'entraînement (30) dans le premier sens de rotation (80) déverrouille la ferrure (10), et
- une rotation de l'élément d'entraînement (30) dans un deuxième sens de rotation (82) actionne un dispositif de verrouillage (70) d'un autre composant de réglage du siège de véhicule (1),
**caractérisé en ce que** l'autre composant de réglage du siège de véhicule (1) est réalisé pour le réglage d'une inclinaison d'une section supérieure de dossier (5b) d'un dossier en deux parties par rapport à une section inférieure de dossier (5a) du dossier en deux parties.

2. Siège de véhicule (1) selon la revendication 1, dans lequel :
un arbre (12) s'étendant dans une direction transversale est prévu, lequel est relié fonctionnellement à l'au moins une ferrure (10) de telle sorte qu'une rotation de l'arbre (12) déverrouille la ferrure (10) ; et/ou
une deuxième ferrure (10) est prévue, laquelle est disposée sur un côté du siège de véhicule (1) qui est opposé à la première ferrure (10).

3. Siège de véhicule (1) selon la revendication 2, dans lequel :
l'arbre (12) est disposé de manière coaxiale à un axe de pivotement du dossier (5) ; et/ou
les deux ferrures (10) sont reliées fonctionnellement à l'aide de l'arbre (12), de sorte que les deux ferrures (10) puissent être déverrouillées en même temps ; et/ou une ouverture de passage (22) de l'adaptateur (20) et une ouverture (38) de l'élément d'entraînement (30) sont disposées de manière coaxiale à l'arbre (12) ; et/ou l'adaptateur (20) est relié à l'arbre (12) de manière solidaire en rotation.

4. Siège de véhicule (1) selon l'une des revendications précédentes, dans lequel :
l'adaptateur (20) est fabriqué à partir d'une matière synthétique ; et/ou
l'adaptateur (20) est fabriqué à l'aide d'un procédé de moulage par injection.

5. Siège de véhicule (1) selon l'une des revendications précédentes, dans lequel :
l'élément d'entraînement (30) présente une butée (32) ; et/ou
l'adaptateur (20) présente une surface de butée (24), en particulier une surface de butée (24) orientée perpendiculairement à une direction circonférentielle.

6. Siège de véhicule (1) selon la revendication 5, dans lequel :
l'élément d'entraînement (30) présente la butée (32) dans la région d'une ouverture (38), laquelle butée peut être amenée en contact avec la surface de butée (24) de l'adaptateur (20) par une rotation de l'élément d'entraînement (30) dans le sens de rotation prédéfini ; et/ou
à l'aide de la butée (32) de l'élément d'entraînement (30) et de la surface de butée (24) de l'adaptateur (20), un accouplement unilatéral en entraînement peut être fourni ; et/ou
l'élément d'entraînement (30) peut être tourné dans un sens de rotation indépendamment de l'adaptateur (20), en particulier peut être tourné le long d'une course à vide.

7. Siège de véhicule (1) selon l'une des revendications précédentes, dans lequel :
un premier élément ressort (40) agit entre l'adaptateur (20) et la ferrure (10), afin de précontraindre l'adaptateur (20) en direction d'une position de base, et/ou
un deuxième élément ressort (50) agit entre l'adaptateur (20) et l'élément d'entraînement (30), afin de précontraindre l'élément d'entraînement (30) en direction d'une position de base.

8. Siège de véhicule (1) selon la revendication 7, dans lequel :
le premier élément ressort (40) est un ressort spiral ; et/ou
l'adaptateur (20) est précontraint à l'aide du premier élément ressort (40).

9. Siège de véhicule (1) selon la revendication 7 ou la revendication 8, dans lequel :
l'adaptateur (20) est précontraint à l'aide du premier élément ressort (40) dans un premier sens de rotation, en particulier en direction d'une première position finale de l'adaptateur (20), dans laquelle la ferrure (10) est verrouillée, et/ou
l'adaptateur (20) peut être tourné à partir d'une première position finale dans un deuxième sens de rotation, par exemple peut être tourné de jusqu'à 30°.

10. Siège de véhicule (1) selon l'une des revendications 7 à 9, dans lequel :
le deuxième élément ressort (50) est un ressort spiral ; et/ou
l'élément d'entraînement (30) est précontraint à l'aide du deuxième élément ressort (50) ; et/ou
l'élément d'entraînement (30) est précontraint à l'aide du deuxième élément ressort (50) dans un deuxième sens de rotation, en particulier en direction d'une première position finale de l'élément d'entraînement (30), dans laquelle une butée (32) de l'élément d'entraînement (30) et une surface de butée (24) de l'adaptateur (20) se trouvent en butée.

11. Siège de véhicule (1) selon l'une des revendications 7 à 10, dans lequel :
le deuxième élément ressort (50) agit sur l'élément d'entraînement (30) dans un sens de rotation opposé à celui dans lequel le premier élément ressort (40) agit sur l'adaptateur (20) ; et/ou
l'élément d'entraînement (30) peut être tourné à partir de sa première position finale dans un premier sens de rotation, par exemple peut être tourné de jusqu'à 20°.

12. Siège de véhicule (1) selon l'une des revendications précédentes, dans lequel :
l'élément d'entraînement (30) présente au moins une came (34), en particulier présente une came faisant saillie radialement, laquelle coopère avec une saillie (26) de l'adaptateur (20) lorsque l'adaptateur (20) est tourné conjointement avec l'élément d'entraînement (30) le long du deuxième sens de rotation ; et/ou
l'élément d'entraînement (30) présente un bras (36), en particulier un bras faisant saillie radialement.

13. Siège de véhicule (1) selon la revendication 12, dans lequel :
le bras (36) présente un logement servant à la liaison d'une section d'extrémité d'un câble Bowden (60) et, en particulier, le câble Bowden (60) est, par son extrémité opposée au bras (36), relié fonctionnellement au dispositif de verrouillage (70) de l'autre composant de réglage du siège de véhicule (1).

14. Véhicule automobile, en particulier véhicule utilitaire, comportant un siège de véhicule selon l'une des revendications précédentes.
